Europäisches Patentamt

European Patent Office

Office européen des brevets

(11) Veröffentlichungsnummer: **0 242 547**
**A2**

(12) **EUROPÄISCHE PATENTANMELDUNG**

(21) Anmeldenummer: 87103226.4

(22) Anmeldetag: 06.03.87

(51) Int. Cl.4: **B60J 5/04** , B60J 1/17

(30) Priorität: **25.04.86 DE 3613978**

(43) Veröffentlichungstag der Anmeldung:
**28.10.87 Patentblatt 87/44**

(84) Benannte Vertragsstaaten:
**DE FR GB IT**

(71) Anmelder: **AUDI AG**
**Postfach 220**
**D-8070 Ingolstadt(DE)**

(72) Erfinder: **März, Helmut**
**Kastenholzstrasse 4**
**D-8071 Lenting(DE)**

(74) Vertreter: **Le Vrang, Klaus**
**AUDI AG Postfach 220 Patentabteilung**
**D-8070 Ingolstadt(DE)**

(54) **Kraftfahrzeugtür.**

(57) Die Erfindung bezieht sich auf eine Kraftfahrzeugtür mit einem Tür-Außenblech und einem Türrahmen sowie mit einem daran befestigten Aggregateträger zur Aufnahme von Tür-Einbauaggregaten, insbesondere zur Aufnahme einer Fensterführung für eine in einen Hohlraum zwischen Aggregateträger und Tür-Außenblech der Kraftfahrzeugtür versenkbare Fensterscheibe.

Es wird das Ziel verfolgt, eine Anpassung des Fensterrahmens bzw. der Fensterscheibe auf einfache Weise zu ermöglichen, wobei auch ein Nachjustieren jederzeit durchgeführt werden kann.

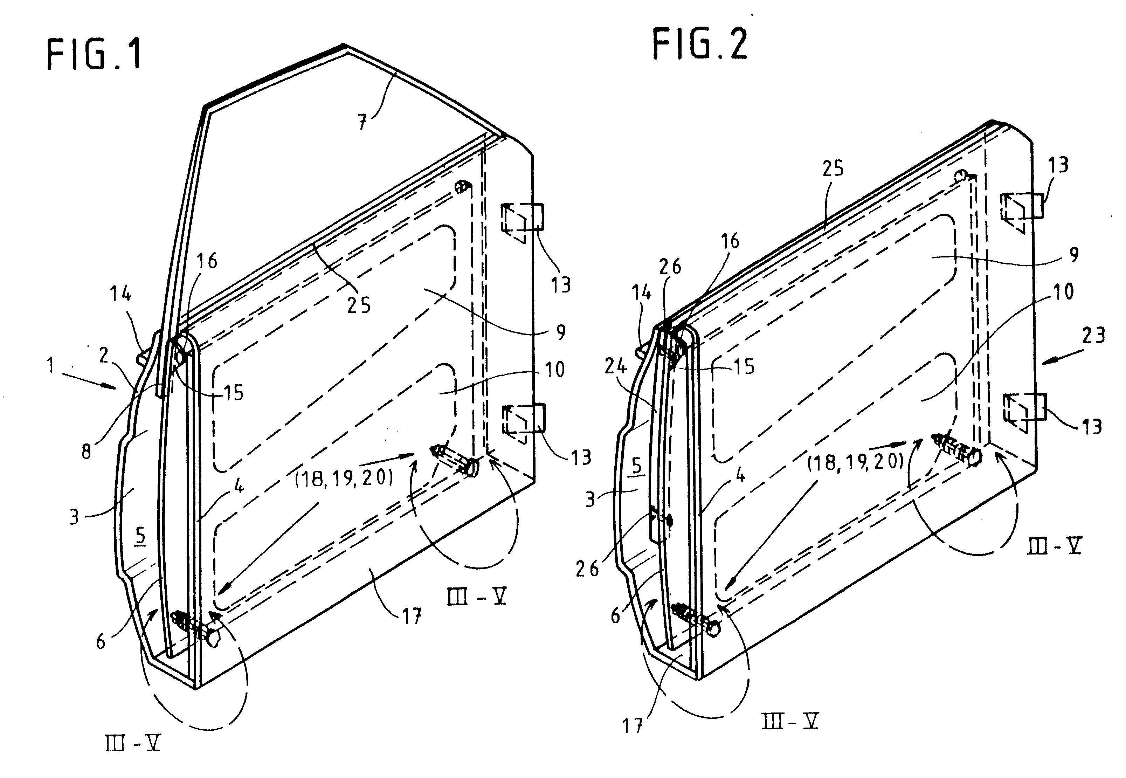

Dies gelingt nach einem der Lösungsvorschläge dadurch, daß die Fensterführung (7, 24) mit dem Aggregateträger (6) fest verbunden ist und der Aggregateträger (6) mittels Gelenkverbindungen (15, 16) am Türrahmen (3) gehalten wird. Weiterhin greifen am Aggregateträger (6) von außerhalb des Hohlraumes (5) betätigbare Verstelleinrichtungen (18, 19 oder 20) an, über die der Aggregateträger (6) gegenüber dem Türrahmen (3) bewegbar ist (Fig. 1).

FIG.1

## Kraftfahrzeugtür

Die Erfindung bezieht sich auf eine Kraftfahrzeugtür gemäß Oberbegriff des Patentanspruches 1.

Eine gattungsgemäße Kraftfahrzeugtür ist beispielsweise der DE-OS 32 09 052 zu entnehmen. Es ist dort ein Aggregateträger mit Einbauaggregaten, insbesondere mit einem kompletten Fensterheber mit Fensterscheibe vorgesehen, der an eine Türaußenhaut mit Türrahmen anmontiert wird. Der Aggregateträger selbst kann dabei aus Metallblech gefertigt sein oder aber auch aus einem geeigneten Kunststoff bestehen.

Grundsätzlich unterscheidet man bei Kraftfahrzeugtüren zwischen solchen, die einen Fensterrahmen aufweisen, der dann bei geschlossener Fahrzeugtür mit den zugeordneten Karosseriebereichen dichtend abschließt und zwischen solchen Kraftfahrzeugtüren, bei denen die Fensterscheibe rahmenlos geführt ist. In diesem Falle ist die gesamte Einrichtung zur Führung der Fensterscheibe innerhalb des eigentlichen Kraftfahrzeugtür-Körpers untergebracht. Sowohl Fensterrahmen als auch Fensterführung sind üblicherweisen am Aggregateträger befestigt, wie dies beispielsweise auch in der DE-OS 34 12 356 gezeigt ist.

Eine nun mehr oder weniger komplett vormontierte Kraftfahrzeugtür wird dann in der Fertigungsstraße an die Fahrzeugkarosserie anmontiert. Aufgrund stets vorhandener mehr oder weniger geringer Maßabweichungen, sowohl bei der Kraftfahrzeugtür als auch bei der übrigen Karosserie, treten bei diesem Montagevorgang stets Probleme dahingehend auf, das exakte Zusammenwirken der Bauteile zu gewährleisten. Eine Maßgabe ist dabei stets, die dichtende Wirkung zwischen Fensterrahmen bzw. bei rahmenlosen Fenstern zwischen der Fensterscheibe und der übrigen Fahrzeugkarosserie sicherzustellen. Dies geschieht in der Praxis meist dadurch, daß bei eingesetzter Kraftfahrzeugtür durch gewaltmäßiges Verwinden des Fensterrahmens dieser in seiner endgültigen Form zu der übrigen Fahrzeugkarosserie "passend gemacht wird".

Diese Vorgehensweise hat verschiedene Nachteile. So wird dadurch eine exakte Fensterführung verhindert, was gerade bei sphärisch gewölbten Fensterscheiben, die während des Schließvorganges exakt vorgegebene Bahnkurven beschreiben, zu Verspannungen führen kann. Durch die Notwendigkeit, die Bauteile aufeinander abstimmen zu müssen, geht sehr viel Zeit verloren, was den Montagevorgang zusätzlich kostensteigern beeinflußt. Da bei rahmenlos geführten Fensterscheiben bei diesem Anpaßvorgang der Aggregateträger insgesamt in seiner Lage verändert werden muß, ist nach endgültiger Montage der Kraftfahrzeugtür ein eventuell erforderlich werdendes Nachjustieren nicht mehr möglich, ohne dabei beispielsweise die Türverkleidung oder andere dabei störende Einbauaggregate vorher wieder demontieren zu müssen.

Von diesem Stand der Technik ausgehend liegt der vorliegenden Erfindung die Aufgabe zugrunde, eine Kraftfahrzeugtür derart zu gestalten, daß deren Anpassung an die Fahrzeugkarosserie, insbesondere die Anpassung des Fensterrahmens bzw. der Fensterscheibe auf einfache Weise möglich ist, wobei auch ein Nachjustieren jederzeit durchgeführt werden kann.

Diese Aufgabe wird erfindungsgemäß mit einer Kraftfahrzeugtür gelöst, die gemäß den Merkmalen des Patentanspruches 1 ausgestaltet ist. Eine weitere Lösung der Aufgabe ist durch die Merkmale des Patentanspruches 2 gegeben. Es ist somit auf besonders einfach Weise möglich, auch sehr feinfühlige Justierarbeiten jederzeit an der Kraftfahrzeugtür vornehmen zu können, wobei die verwendeten Verstellmechanismen in vorteilhafter Weise derart angeordnet sind, daß dadurch der optische Eindruck insgesamt nicht beeinträchtigt wird. Es bietet sich daher an, die Verstelleinrichtungen aus dem Bodenbereich des Türrahmens hervortreten zu lassen. Dadurch, daß je Kraftfahrzeugtür jeweils zwei Verstellmechanismen im vordern bzw. hinteren Fahrzeugtürbereich vorgesehen sind, kann beispielsweise der Aggregateträger quasi in zwei Ebenen bewegt werden.

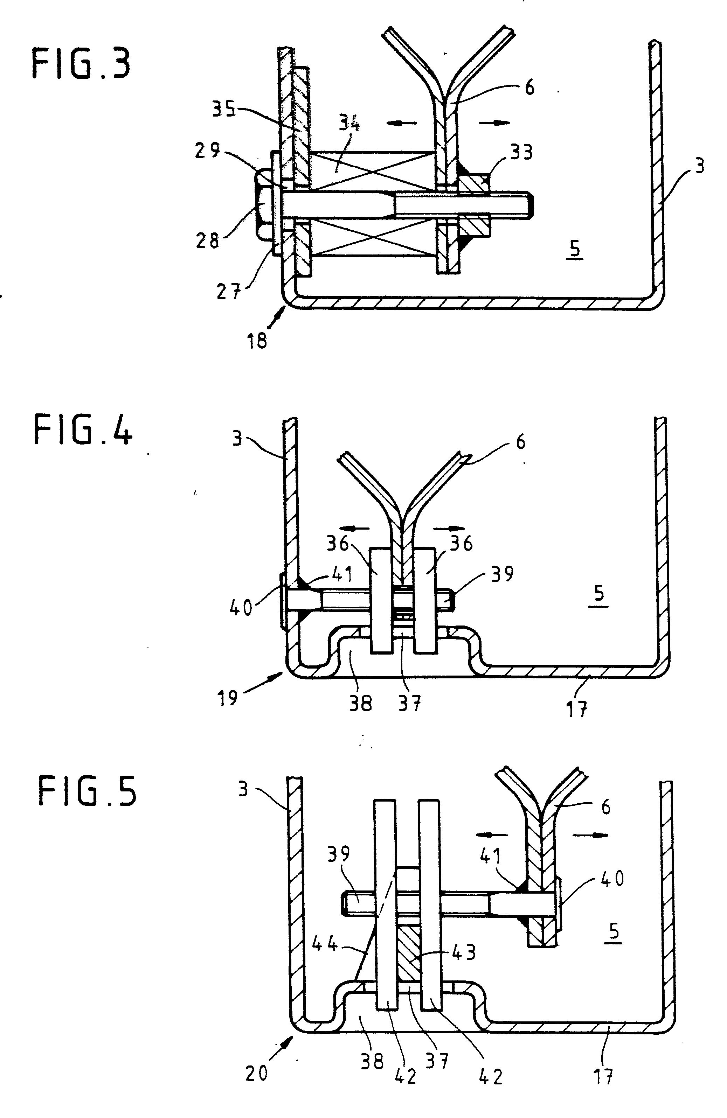

Insbesondere die Ausführungsform nach Fig. 3 bietet weitergehende Vorteile. So wirkt bei entsprechender Auslegung der Federkennlinien (z. B. Tellerfedern) das so geschaffene System dem Abheben der Fensterscheibe bei höheren Fahrtgeschwindigkeiten progressiv entgegen, wobei infolge dieses Effektes die ansonsten hoch zu wählenden Türschließkräfte reduziert werden können bzw. ein leichterer Lauf der Fensterscheibe gewählt werden kann. Die zur Anwendung kommenden Federn können außerdem so ausgelegt werden, daß damit der Anpreßdruck im Türdichtsystem für diese Funktion optimal gewählt werden kann. Gerade für rahmenlos geführte Fensterscheiben bietet dies wesentliche Vorteile.

Die Lösung nach Patentanspruch 2 ermöglicht es darüber hinaus, in besonderem Maße Korrekturen bei der Fensterführung vornehmen zu können, so daß auch nachträglich noch eine Anpassung an die vorgegebene Bahnkurve der Fensterscheibe möglich ist.

Weiter Vorteile ergeben sich aus den Unteransprüchen sowie der nachstehenden Figurenbeschreibung, die verschiedene Ausführungsformen aufzeigt. Die zugehörige Zeichnung zeigt dabei im einzelnen in

Fig. 1 eine erfindungsgemäß ausgestattete Kraftfahrzeugtür mit rahmengeführter Fensterscheibe,

Fig. 2 eine entsprechende Kraftfahrzeugtür mit rahmenlos geführter Fensterscheibe,

Fig. 3 eine erste Ausführungsform eines am Aggregateträger angreifenden Verstellmechanismus unter Verwendung von Federelementen,

Fig. 4 eine zweite Ausführungsform eines Verstellmechanismus mit aus dem Boden des Türrahmens herausragenden Stellmitteln,

Fig. 5 eine dritte Ausführungsform einer Verstelleinrichtung,

Fig. 6 einen Aggregateträger mit damit gelenkig verbundenem Fensterrahmen und

Fig. 7 einen Aggregateträger für eine rahmenlos geführte Fensterscheibe mit einer daran gelenkig angebrachten Fensterführung.

Die Fig. 1 zeigt in einer perspektivischen Darstellung eine Kraftfahrzeugtür (1), die zunächst ein Tür-Außenblech (2) sowie einen damit verbundenen Türrahmen (3) aufweist. Dem Außenblech (2) gegenüberliegend und dabei dem Fahrgastraum zugewandt ist weiterhin eine Türverkleidung (4) vorgesehen. In einem durch das Außenblech (2) und die Türverkleidung (4) gebildeten Hohlraum (5) ist ein Aggregateträger (6) angeordnet, der unter anderem die hier nicht näher dargestellten Einbauaggregate, wie beispielsweise Fensterheber, Tür-Schließmechanismus usw. aufnimmt und außerdem einen Fensterrahmen (7) für eine darin geführte Fensterscheibe trägt. Der Fensterrahmen (7) ist beispielsweise mittels Schweißverbindung (8) unlösbar mit dem Aggregateträger (6) verbunden. Für Montage-oder Wartungsarbeiten an vorgenannten Einbauaggregaten ist der Aggregateträger (6) mit mehr oder weniger großflächigen Öffnungen (9, 10) versehen. Türscharniere (13) sowie Türgriff (14) vervollständigen im wesentlichen das äußere Erscheinungsbild der Kraftfahrzeugtür (1).

Sowohl im Bereich der Türscharniere (13) als auch nahe des Türgriffes (14) ist der Aggregateträger (6) mit Stegen (15) versehen, über die er mittels Schraubenbolzen (16) mit dem Türrahmen (3) gelenkig verbunden ist. Jeder dieser Gelenkverbindungen ist im Bodenbereich (17) des Türrahmens (3) eine Verstelleinrichtung (18, 19 oder 20) zugeordnet, die in verschiedenen Ausführungen in den Fig. 3 bis 5 näher beschrieben ist. Mittels einer solchen Verstelleinrichtung (18, 19 oder 20) kann der Aggregateträger (6) bzw. der damit fest verbundene Fensterrahmen (7) relativ zu dem Türrahmen (3) verstellt werden, so daß damit eine Anpassung an die maßlichen Gegebenheiten der Türöffnung in der Fahrzeugkarosserie erfolgen kann. Die Kraftfahrzeugtür (23) gemäß Fig. 2 zeigt im wesentlichen den gleichen konstruktiven Aufbau, wobei lediglich anstatt eines Fensterrahmens eine sehr weit in den Hohlraum (5) hineinreichende Fensterführung (24) vorgesehen ist, so daß auch eine rahmenlos aus einem entsprechenden Schlitz (25) der Kraftfahrzeugtür (23) heraustretende Fensterscheibe (nicht dargestellt) ausreichend geführt ist. Die im Bereich der Türscharniere (13) sowie des Türgriffes (14) vorgesehenen Fensterführungen (24) sind mit dem Aggregateträger (6) beispielsweise mittels Schraubverbindung (26) verbunden, wobei selbstverständlich auch eine andere Befestigungsart gewählt werden kann.

Die auch hier zum Einsatz kommenden, am Aggregateträger (6) angreifenden Verstelleinrichtungen (18, 19 oder 20) für die Relativbewegung des Aggregateträgers (6) in zwei Bewegungsebenen sind in den Fig. 3 bis 5 näher beschrieben.

Eine auf einer Unterlegscheibe (27) sich abstützende Stellschraube (28) ragt durch eine Öffnung (29) des fahrgastraumseitigen Türrahmens (3) hindurch und in den bereits erwähnten Hohlraum (5) hinein. Die Stellschraube (28) ist dabei in eine, auf den Aggregateträger (6) aufgeschweißte Mutter (33) eingeschraubt. Diese Schraubverbindung wird nun mittels eines Federelementes, beispielsweise eines Tellerfederpaketes (34) unter Vorspannung gehalten, wobei sich dieses Tellerfederpaket (34) am Aggregateträger (6) sowie an einem, dem fahrgastinnenraumseitigen Türrahmen (3) zugeordneten Verstärkungsblech (35) abstützt.

Mit der nun aus dem Türrahmen (3) herausragenden Stellschraube (28) läßt sich auf einfache Weise und jederzeit eine Verstellung des Aggregateträgers (6), der den Fensterrahmen (7) oder die daran fest angebrachte Fensterführung (24) trägt, vornehmen. Bei entsprechender Auslegung der Federkennlinien des Tellerfederpaketes (34) ist damit ein definierter Anpreßdruck des Fensterrahmens (7) oder der rahmenlos geführten Fensterscheibe an die karosserieseitige Türdichtung möglich. Das System wirkt dabei dem Abheben der Fensterscheibe (aufgrund der herrschenden Druckverhältnisse bei höheren Fahrtgeschwindigkeiten) progressiv entgegen.

In der in Fig. 4 gezeigten Ausführungsform erfolgt die Verstellung mittels zweier Rändelmuttern (36), die aus einer Öffnung (37) des Bodenbereiches (17) des Türrahmens (3) zumindest mit einem Teil ihrer Umfangslinie herausragen können. Der Bodenbereich (17) weist dort eine sickenförmige Einbuchtung (38) auf, so daß gewährleistet ist, daß die Rändelmuttern (36) nicht über die äußeren Konturen der Kraftfahrzeugtür (1, 23) hervorstehen, so daß weder der optische Eindruck nachhaltig gestört noch der Schließvorgang der Kraftfahrzeugtür (1, 23) durch hervorstehende Teile behindert wird.

Die Rändelmuttern (36) umfassen dabei beidseitig den Aggregateträger (6) und sind auf einen Schaft (39) einer Schraube aufgeschraubt, die im Bereich ihres Schraubenkopfes (40) beispielsweise mittels Schweißverbindung (41) mit dem Türrahmen (3) verbunden ist.

Eine im Prinzip gleich wirkende Ausführungsform zeigt Fig. 5. Hier ist die Schraube im Bereich ihres Schraubenkopfes (40) mit dem Aggregateträger (6) fest verbunden, während wiederum zwei beispielsweise manuell zu betätigende Rändelmuttern (42) vorgesehen sind, die einen Haltebock (43) einschließen, dessen Steg (44) im Bodenbereich (17) des Türrahmens (3) im Bereich der sickenförmigen Einbuchtung (38) befestigt ist.

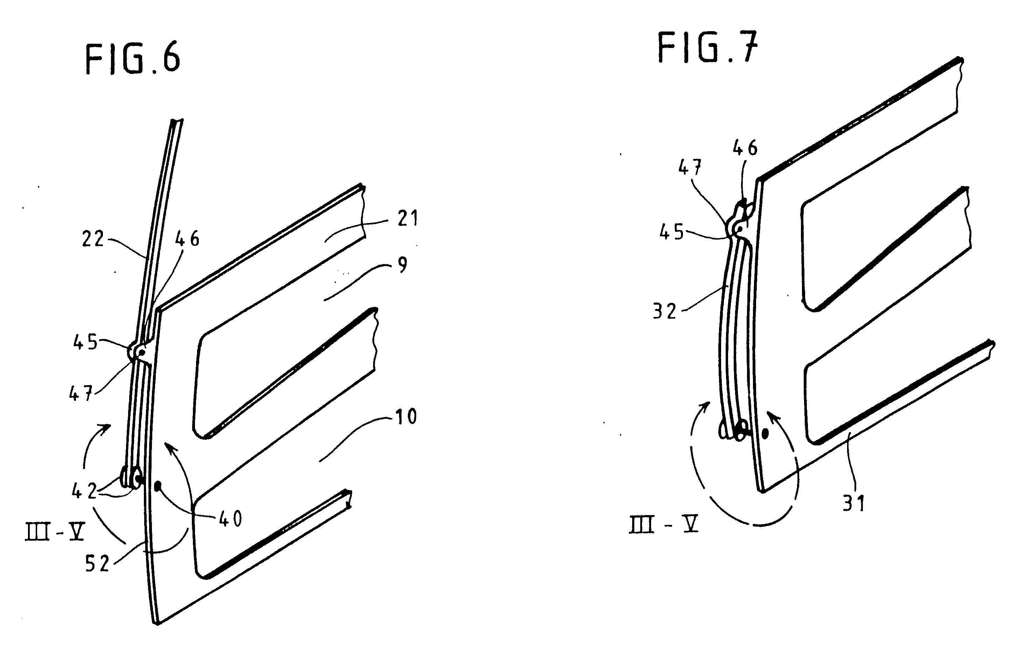

Eine andere Lösung der zugrundeliegenden Aufgabe ist erfindungsgemäß durch eine Vorgehensweise möglich, wie sie mit den Ausführungsformen gemäß den Fig. 6 und 7 aufgezeigt wird. Dabei ist gemäß Fig. 6 der Aggregateträger (21) an dem hier nicht gezeigten Türrahmen (3) befestigt und der mit dem Aggregateträger (21) verbundene Fensterrahmen (22) ist dort an einer ersten Verbindungsstelle mittels durch Stege (45, 46) hindurchgreifende Schraubenbolzen (47) gelenkig verbunden. Am unteren Ende des Fensterrahmens (22) greift eine Verstelleinrichtung (18, 19 oder 20) an. Der Fensterrahmen wird dabei beispielsweise von zwei Stellmuttern (42) umfaßt, die auf den Schaft (39) einer Schraube aufgeschraubt sind, deren Schraubenkopf (40) beispielsweise mittels Schweißverbindung am Aggregateträger (6) befestigt ist (Ausführungsform nach Fig. 5). Die Wirkungsweise im einzelnen entspricht analog der der jeweils gewählten Ausführungsform gemäß Fig. 3 bis 5. Die Stellmuttern (42) ragen dabei etwas aus der vorderen Kante (52) des Aggregateträgers (21) hervor, wobei auch in dem hier nicht gezeigten Türrahmen (3) eine entsprechende Öffnung vorzusehen ist, so daß sie von dort aus betätigt werden können, um damit den Fensterrahmen (22) gegenüber dem Aggregateträger (21) zu verstellen.

Fig. 7 zeigt eine ähnliche Vorgehensweise bei einer Fahrzeugtür ohne Fensterrahmen mit einer langgezogenen, am Aggregateträger (31) angelenkten bzw. mit einer der Verstelleinrichtungen (18, 19 oder 20) verstellbaren Fensterführung (32). Die Funktionsweise ist unter Berücksichtigung der Ausführungen zu Fig. 6 unmittelbar aus der Fig. 7 entnehmbar, so daß ein weiteres Eingehen hierauf sich erübrigt. Selbstverständlich sind sowohl die Anlenkpunkte als auch die Verstelleinrichtungen (18, 19 oder 20) jeweils zweifach, d.h. im Bereich der Türnscharniere und im Bereich des Türgriffes vorgesehen.

Die Erfindung ist nicht auf die gezeigten Ausführungsformen beschränkt, sondern umfaßt selbstverständlich auch insbesondere andere konstruktive Lösungen, mit denen eine Relativbewegung zwischen Aggregateträger und Türrahmen oder zwischen Aggregateträger und Fensterrahmen bzw. Fensterführung jederzeit, d.h. auch bei bereits fertig montierter Kraftfahrzeugtür durchgeführt werden kann. So wäre z. B. auch denkbar, die Gelenkverbindungen im Bodenbereich und die Verstelleinrichtungen im oberen Bereich des Türkörpers anzuordnen.

**Ansprüche**

1. Kraftfahrzeugtür mit einem Tür-Außenblech und einem Türrahmen sowie mit einem daran befestigten Aggregateträger zur Aufnahme von Tür-Einbauaggregaten, insbesondere zur Aufnahme einer Fensterführung für eine in einen Hohlraum zwischen Aggregateträger und Tür-Außenblech der Kraftfahrzeugtür versenkbare Fensterscheibe, **dadurch gekennzeichnet,** daß die Fensterführung (7, 24) mit dem Aggregateträger (6) fest verbunden ist, daß der Aggregateträger (6) mittels Gelenkverbindungen (15, 16) am Türrahmen (3) gehalten wird und daß am Aggregateträger (6) von außerhalb des Hohlraumes (5) betätigbare Verstelleinrichtungen (18, 19 und 20) angreifen, über die der Aggregateträger (6) gegenüber dem Türrahmen (3) bewegbar ist.

2. Kraftfahrzeugtür mit einem Tür-Außenblech und einem Türrahmen sowie mit einem daran befestigten Aggregateträger zur Aufnahme von Tür-Einbauaggregaten, insbesondere zur Aufnahme einer Fensterführung für eine in einen Hohlraum zwischen Aggregateträger und Tür-Außenblech der Kraftfahrzeugtür versenkbare Fensterscheibe, **dadurch gekennzeichnet,** daß die Fensterführung (22, 32) über Gelenkverbindungen (45 bis 47) mit dem Aggregateträger (21, 31) verbunden ist, daß der Aggregateträger (21, 31) mit dem Türrahmen (3) fest verbunden ist und daß an der Fensterführung (22, 32) von außerhalb des Hohlraumes (5) betätigbare Verstelleinrichtungen (18, 19 oder 20) angreifen, über die die Fensterführung (22, 32) gegenüber dem Aggregateträger (21, 31) verstellbar ist.

3. Kraftfahrzeugtür nach Patentanspruch 1 oder 2, **dadurch gekennzeichnet,** daß die Fensterführung als aus dem Hohlraum (5) herausragender Fensterrahmen (7, 22) ausgeführt ist.

4. Kraftfahrzeugtür nach Patentanspruch 1 oder 2, **dadurch gekennzeichnet,** daß die Fensterführung als innerhalb des Hohlraumes angeordnete, langgestreckte und in etwa vertikal verlaufende Fensterführung (24, 32) im Bereich von Türscharnieren (13) und Türgriff (14) ausgeführt ist.

5. Kraftfahrzeugtür nach Patentanspruch 3 oder 4, **dadurch gekennzeichnet,** daß als Stellmittel eine durch eine Öffnung (29) des fahrgastraumseitigen Türrahmens (3) hindurchragende und in den Hohlraum (5) hineinragende Stellschraube (28) vorgesehen ist, die in eine auf den zu verstellenden Teil (6, 22, 32) aufgeschweißte Mutter (33) eingeschraubt ist, wobei diese Schraubverbindung mittels eines Federelementes (34) unter Vorspannung gehalten wird und dieses Federelement (34) zwischen den relativ zueinander sich bewegenden Bauteilen (3, 6, 21, 22, 31, 32) angeordnet ist.

6. Kraftfahrzeugtür nach Patentanspruch 3 oder 4, **dadurch gekennzeichnet,** daß als Stellmittel zwei Rändelmuttern (36) vorgesehen sind, die durch eine Öffnung (37) des Türrahmens (3) hindurch betätigbar sind und dabei beidseitig den zu verstellenden Teil (6, 22, 32) umfassen, wobei die Rändelmuttern (36) auf den Schaft (39) einer Schraube aufgeschraubt sind, die im Bereich ihres Schraubenkopfes (40) mit einem stationären Teil (3, 21, 31) der Kraftfahrzeugtür (1, 23) fest verbunden ist.

7. Kraftfahrzeugtür nach Patentanspruch 6, **dadurch gekennzeichnet,** daß die Öffnung (37) im Bodenbereich (17) des Türrahmens (3) vorgesehen ist, wobei der Bodenbereich (17) dort eine sickenförmige Einbuchtung (38) aufweist.

8. Kraftfahrzeugtür nach Patentanspruch 3 oder 4, **dadurch gekennzeichnet,** daß als Stellmittel zwei Rändelmuttern (42) vorgesehen sind, die durch eine Öffnung des Türrahmens (3) hindurch betätigbar sind und dabei beidseitig einen stationären Teil (43, 21, 31) der Kraftfahrzeugtür (1, 23) umfassen, wobei in die Rändelmuttern (42) der Schaft (39) einer Schraube eingeschraubt ist, die im Bereich ihres Schraubenkopfes (40) mit dem zu bewegenden Teil (6, 22, 32) fest verbunden ist.

9. Kraftfahrzeugtür nach Patentanspruch 8, **dadurch gekennzeichnet,** daß die Rändelmuttern (42) einen Haltebock (43) einschließen, dessen Steg (44) im Bodenbereich (17) des Türrahmens (3) im Bereich einer mit der Öffnung (37) versehenen sickenförmigen Einbuchtung (38) befestigt ist.

FIG.1

FIG.2

7

25

13

16

26

16

13

14

25

14

24

9

15

9

1

2

10

15

10

23

8

13

(18,19,20)

26

13

3

5

5

3

III - Ⅴ

5

4

6

(18,19,20)

6

4

17

III - Ⅴ

17

III - Ⅴ

III - Ⅴ

0 242 547

FIG.3

FIG.4

FIG.5

# FIG.6

22　46

21

9

45

47

10

42

III-V

40

52

# FIG.7

46

47

45

32

31

III-V

0 242 547